# EUROPEAN PATENT APPLICATION

(11) **EP 3 549 964 A1**
(43) Date of publication of application: **09.10.2019**
(21) Application number: 16923021.6
(22) Date of filing: 30.11.2016
(51) Int. Cl.: C08G 18/08, C08G 18/10, C08G 18/18, C08G 18/48, C08K 3/04, C08K 5/541, C08L 75/08

(54) **TWO-PART CURABLE URETHANE COMPOSITION**

(71) Applicant: Hitachi Chemical Company, Ltd., Chiyoda-ku Tokyo 100-6606 (JP)
(72) Inventor: MORI, Kazuhiko, Tokyo 100-6606 (JP); MATSUMIYA, Hisao, Tokyo 100-6606 (JP); HIRAMOTO, Yuya, Tokyo 100-6606 (JP); SAKAI, Hiroyuki, Tokyo 100-6606 (JP); ITO, Akihiro, Tokyo 100-6606 (JP)
(74) Representative: Hoffmann Eitle
(86) International application number: PCT/JP2016/085573
(87) International publication number: WO 2018/100685

(57) **Abstract**

A two-part curable urethane composition comprising a main agent (A) containing a urethane prepolymer (a), and a curing agent (B) containing a polyether polyol (b) having a weight average molecular weight of 8000 or more and an amine catalyst (c), wherein the urethane prepolymer (a) is a reaction product of a polyether polyol (a-1) having a weight average molecular weight of 8000 or more and a diisocyanate (a-2), at least one of the main agent (A) and the curing agent (B) contains a carbon black (d) at a specified ratio by mass, and at least one of the main agent (A) and the curing agent (B) contains a silane coupling agent (e) at a specified ratio by mass.

## Description

### Technical Field

The present invention relates to a two-part curable urethane composition.

### Background Art

Although interior and exterior components of an automobile such as a body, a front door, a rear door, a back door, a front bumper, a rear bumper and a rocker molding are generally made of steel plate, lightweight components are required to meet the recent demand for improvement in fuel efficiency. Use of plastic materials such as polypropylene to replace steel plates for interior and exterior components of an automobile has therefore increased. Incidentally, since plastic materials such as polypropylene have lower strength than steel plates, talc and glass filler are usually added thereto to enhance the strength.

As the adhesive between plastic components of an automobile, for example, made of polypropylene, urethane compositions have been proposed.

Examples of the known urethane compositions include one-part adhesives referred to as moisture cure adhesives that are cured by moisture in air, and two-part adhesives consisting of an isocyanate compound and a polyol compound. Among them, from the perspective of workability in the adhesion step, two-part adhesives are preferred, allowing a sufficient usable time (pot life: time until a multi-part coating material starts to be cured through chemical reactions or the like) to be secured and fast curing to be achieved.

A polypropylene substrate has a surface with a small polarity to be hardly bonded, so that a surface treatment for introducing polar groups to the substrate surface is usually performed to facilitate adhesion. Examples of the treatment applied to the surface include a plasma treatment, a corona treatment, and a flame treatment. Further, due to difficulty in direct application of a urethane composition for adhesion of surface-treated polypropylene substrates to each other, each of the polypropylene substrates is usually subjected to a primer treatment as pretreatment before application of the urethane composition. However, from the perspective of process simplification and improvement in working environment, no use of primer is recently required.

Examples of the performance required for a cured adhesive include adhesiveness, heat aging resistance, warm water resistance, fatigue resistance, and thermal creep resistance. In particular, thermal creep resistance for holding a state loaded with the own weight of an automobile component for a long period is important.

To fulfill these various properties, carbon black is usually compounded in urethane compositions. Thereby, the mechanical strength of the urethane compositions is improved, and the viscosity and thixotropic properties excellent in terms of handling can be imparted.

In Patent Literature 1, a non-primer adhesive made of one-part moisture curable urethane resin composition is disclosed, and in Patent Literature 2, a two-part curable composition made of a main agent (first liquid) containing an isocyanate compound and a curing agent (second liquid) containing ketimine to be mixed during working is disclosed.

### Citation List

### Patent Literature

Patent Literature 1: Japanese Unexamined Patent Publication No. 2008-38019
Patent Literature 2: Japanese Unexamined Patent Publication No. 2004-131625

### Summary of Invention

### Technical Problem

However, since the non-primer adhesive in Patent Literature 1 is a one-part adhesive, the workability may be reduced due to a short pot life. Further, as a result of examination by the present inventors, it was found that the non-primer adhesive in Patent Literature 1 leaves room for improvement in the thermal creep resistance.

Furthermore, although there is no comment on primers in Patent Literature 2, as a result of examination by the present inventors, it was found that the two-part curable composition in Patent Literature 2 has difficulty in making adhesion between polypropylene substrates without primer treatment.

An object of the present disclosure is, therefore, to provide a two-part curable urethane composition excellent in non-primer adhesiveness and thermal creep resistance.

### Solution to Problem

Through extensive investigation, the present inventors have found that two-part curable urethane compositions shown in the following items [1] to [3] are excellent in non-primer adhesiveness and thermal creep resistance.
[1] A two-part curable urethane composition comprising a main agent (A) containing a urethane prepolymer (a), and a curing agent (B) containing a polyether polyol (b) having a weight average molecular weight of 8000 or more and an amine catalyst (c), wherein
   the urethane prepolymer (a) is a reaction product of a polyether polyol (a-1) having a weight average molecular weight of 8000 or more and a diisocyanate (a-2),
   at least one of the main agent (A) and the curing agent (B) contains a carbon black (d), and a total content of the carbon black (d) is 10 to 40 mass% relative to the total amount of the main agent (A) and the curing agent (B), and
   at least one of the main agent (A) and the curing agent (B) contains a silane coupling agent (e), and a total content of the silane coupling agent (e) is 0.3 to 5.0 mass% relative to the total amount of the main agent (A) and the curing agent (B).
[2] The two-part curable urethane composition according to item [1], wherein the carbon black (d) has an average particle size of 20 to 40 nm.
[3] The two-part curable urethane composition according to item [1] or [2], having an equivalent ratio of NCO/OH groups of 1.0 to 1.5 in the main agent (A) and the curing agent (B).

### Advantageous Effects of Invention

The two-part curable urethane composition of the present disclosure is excellent in adhesion, heat aging resistance, warm water resistance, fatigue resistance, thermal creep resistance and non-primer adhesiveness.

### Description of Embodiments

Preferred embodiments of the present disclosure are described below, though the present disclosure is not limited to the embodiments. In the present specification, a numerical range shown by using "to" indicates a range including the respective numerical values prepositioned and post-positioned relative to "to" as the minimum and the maximum. In the numerical range shown stepwise in the present specification, the upper limit or the lower limit of the numerical range in a step may be replaced with the upper limit or the lower limit of the numerical range in another step. Also, in the numerical range shown in the present specification, the upper limit or the lower limit of the numerical range may be replaced with the value shown in Examples.

The two-part curable urethane composition of the present embodiment (hereinafter also referred to simply as "urethane composition") comprises a main agent (A) containing a urethane prepolymer (a) and a curing agent (B) containing a polyether polyol (b) having a weight average molecular weight of 8000 or more and an amine catalyst (c). The urethane composition can be cured by mixing the main agent (A) and the curing agent (B).

At least one of the main agent (A) and the curing agent (B) contains a carbon black (d), and at least one of the main agent (A) and the curing agent (B) contains a silane coupling agent (e). Further, it is preferable that at least one of the main agent (A) and the curing agent (B) contain a plasticizer (f) and/or a filler (g). Each of the components is described as follows.

### <Urethane prepolymer (a)>

The urethane prepolymer (a) is a reaction product of a polyether polyol (a-1) and a diisocyanate (a-2). The content of the urethane prepolymer (a) is preferably 10 to 90 mass%, more preferably 20 to 80 mass%, still more preferably 30 to 70 mass%, relative to the main agent (A).

### <Polyether polyol (a-1)>

The polyether polyol (a-1) is a polyether polyol having two or more hydroxy groups. Specific examples thereof include polyethylene glycol (PEG), polypropylene glycol (PPG), an ethylene oxide/propylene oxide copolymer, polytetramethylene ether glycol (PTMEG), and a sorbitol polyol. Among these, polypropylene glycol (PPG) is preferred. The polyether polyol (a-1) may be used singly or in combination of two or more thereof.

The polyether polyol (a-1) has a weight average molecular weight of 8000 or more, and it is preferable that the weight average molecular weight be 10000 or more. With a weight average molecular weight of the polyether polyol (a-1) of 8000 or more, excellent thermal creep resistance can be achieved due to increased cohesive force of the prepolymer when urethanized. Further, the polyether polyol can be highly polymerized by reducing the amount of by-products generated during the production process to achieve a narrower variation. The highest weight average molecular weight of currently commercially available PPG (polypropylene glycol) is about 15000. Examples of the commercially available high molecular weight polyether polyol for use include PREMINOL (registered trademark, the same applies to the following) manufactured by AGC Chemicals Company. PREMINOL 3012 for use in Examples is a polymer of polypropylene glycol produced by using glycerol as an initiator, and PREMINOL 7012 is a copolymer of polyethylene glycol and polypropylene glycol produced by using glycerol as an initiator.

In the present specification, the term "weight average molecular weight" is a value obtained utilizing gel permeation chromatography (GPC) and calculated using a calibration curve of the standard polystyrene.

The GPC measurement conditions are as follows.
- Measurement apparatus: HLC-8120 (manufactured by Tosoh Corporation)
- Column: TSK guard column HXL-L (manufactured by Tosoh Corporation)
- Carrier: tetrahydrofuran (THF)
- Detector: differential refractometer
- Sample: 0.1 mass% solution in THF
- Calibration curve: Polystyrene

### <Diisocyanate (a-2)>

The diisocyanate (a-2) is not particularly limited so long as it is a compound having two isocyanate groups (NCO groups). Specific examples thereof include toluene diisocyanate (TDI), diphenylmethane diisocyanate (MDI), hexamethylene diisocyanate (HDI), xylene diisocyanate (XDI), naphthalene diisocyanate (NDI), and isophorone diisocyanate (IPDI), and in particular, diphenylmethane diisocyanate (MDI) is preferred due to the sufficient curing rate. The diisocyanate (a-2) may be used singly or in combination of two or more thereof.

### <Polyether polyol (b)>

The polyether polyol (b) is not particularly limited, so long as it has two or more hydroxy groups and a weight average molecular weight of 8000 or more. Specifically, compounds similar to the polyether polyol (a-1) can be suitably used. The polyether polyol (a-1) and the polyether polyol (b) may be the same or different. The content of the polyether polyol (b) is preferably 10 to 90 mass%, more preferably 20 to 80 mass%, still more preferably 30 to 70 mass%, relative to the main agent (B).

### <Amine catalyst (c)>

As the amine catalyst (c), a known catalyst which accelerates a urethanization reaction or a urea-forming reaction can be used. It is preferable that the amine catalyst (c) be, for example, a tertiary amine, from the perspective of enhancement of the moisture reactivity.

Specific examples of the amine catalyst (c) include N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylguanidine, 1,3,5-tris(N,N-dimethylaminopropyl)hexahydro-S-triazine, 1,8-diazabicyclo[5.4.0]undecene-7, triethylenediamine, N,N,N',N'-tetramethylhexamethylenediamine, N-methyl-N'-(2-dimethylaminoethyl)piperazine, N,N'-dimethylpiperazine, dimethylcyclohexylamine, N-methylmorpholine, bis(2-dimethylaminoethyl)ether, 1-methylimidazole, 1,2-dimethylimidazole, 1-isobutyl-2-methylimidazole, 1-dimethylaminopropylimidazole, N,N-dimethylethanolamine, N,N-dimethylisopropanolamine, N,N-dimethylhexanolamine, N,N-dimethylaminoethoxyethanol, N,N,N'-trimethyl-N'-(2-hydroxyethyl)ethylenediamine, N,N,N'-trimethyl-N'-(2-hydroxyethyl)propanediamine, N-methyl-N'-(2-hydroxyethyl)piperazine, bis(dimethylaminopropyl)methylamine, bis(dimethylaminopropyl)isopropanolamine, 1-(2-hydroxyethyl)imidazole, 1-(2-hydroxypropyl)imidazole, 1-(2-hydroxyethyl)-2-methylimidazole, 1-(2-hydroxypropyl)-2-methylimidazole, 3-quinuclidinol, and 2,2'-dimorpholinodiethyl ether. The amine catalyst (c) may be used singly or in combination of two or more thereof.

The content of the amine catalyst (c) in the urethane composition is preferably 1.0 to 10.0 parts by mass, more preferably 1.0 to 8.0 parts by mass, still more preferably 1.5 to 5.0 parts by mass, relative to 100 parts by mass of the polyether polyol (b).

### <Carbon black (d)>

The carbon black (d) has an average particle size (D50: particle size corresponding to the 50% value of the volume particle size distribution curve) of, preferably 20 to 40 nm, more preferably 25 to 35 nm. With an average particle size of the carbon black in the specified range, the viscosity of the adhesive and the dispersibility of the carbon black can be adjusted to a more appropriate range, so that the workability and strength of the adhesive can be further improved. Incidentally, the average particle size (D50) of the carbon black can be measured, for example, by a laser diffraction/scattering method, for example, using "Model LS-230" manufactured by Beckman Coulter Inc.

As the carbon black, for example, commercially available products such as ASAHI CARBON #70 (manufactured by Asahi Carbon Co., Ltd.), SEAST 3 (manufactured by Tokai Carbon Co., Ltd., "SEAST" is a registered trademark), MITSUBISHI CARBON #32 (manufactured by Mitsubishi Chemical Corporation), and NITERON #200 (manufactured by Nippon Steel Carbon Co., Ltd., "NITERON" is a registered trademark) can be suitably used.

The total content of the carbon black (d) in the main agent (A) and the curing agent (B) of the urethane composition is 10 to 40 mass% relative to the total amount of the main agent (A) and the curing agent (B). With a total content of the carbon black (d) less than 10 mass%, the strength of the adhesive decreases. On the other hand, with a total content of the carbon black (d) more than 40 mass%, the strength of the adhesive cannot be maintained due to decrease in the dispersibility.

It is preferable that the total content of the carbon black (d) be 15 to 35 mass% from the perspective of further improvement in the workability and weather resistance of the adhesive.

### <Silane coupling agent (e)>

The silane coupling agent (e) is an organic silicon compound having two types of functional groups having different reactivity in a molecule. Examples of the silane coupling agent (e) include epoxysilane, vinylsilane, imidazolesilane, mercaptosilane, aminosilane, styrylsilane, isocyanatesilane, isocyanuratesilane, sulfidesilane and ureidosilane. In particular, mercaptosilane, aminosilane, sulfidesilane, isocyanatesilane or isocyanuratesilane is preferred from the perspective of further improvement in the non-primer adhesiveness of the urethane composition.

The silane coupling agent (e) forms urethane bonds and siloxane bonds in the urethane composition, and forms covalent bonds with polar groups introduced to the surface of the polypropylene substrate. The silane coupling agent (e), therefore, contributes to adhesion between the urethane composition and the polypropylene substrate. The silane coupling agent (e) may be used singly or in combination of two or more thereof.

The total content of the silane coupling agent (e) in the main agent (A) and the curing agent (B) of the urethane composition is 0.3 to 5.0 mass% relative to the total content of the main agent (A) and the curing agent (B). With a total content of the silane coupling agent (e) less than 0.3 mass%, the adhesive strength between the urethane composition and the polypropylene substrate decreases, so that the non-primer adhesiveness under high temperature decreases. A content of the silane coupling agent (e) more than 5.0 mass% lowers the cohesive force developed by the urethane composition and the filler (in particular, carbon black), so that the thermal creep resistance decreases.

The total content of the silane coupling agent (e) is preferably 0.3 to 3.0 mass%, more preferably 0.3 to 2.0 mass%, from the perspective of further improvement in the non-primer adhesiveness and the thermal creep resistance.

### <Plasticizer (f)>

Examples of the plasticizer (f) include phthalic acid ester compounds, alkylsulfonic acid ester compounds, and adipic acid ester compounds. Specific examples of the phthalic acid ester compounds include dioctyl phthalate (DOP), dibutyl phthalate (DBP), diisononyl phthalate (DINP), diisodecyl phthalate (DIDP) and butylbenzyl phthalate (BBP).

### <Filler (g)>

Examples of the filler other than the carbon black (d) described above include kaolin, talc, silica, titanium oxide, calcium carbonate, bentonite, mica, sericite, glass flakes, glass fibers, graphite, magnesium hydroxide, aluminum hydroxide, antimony trioxide, barium sulfate, zinc borate, alumina, magnesia, wollastonite, xonotlite and whiskers.

The urethane composition of the present embodiment may further contain softening agents, stabilizers, anti-aging agents, lubricants, thickeners, defoaming agents and coloring agents, in addition to the components described above.

It is preferable that the equivalent ratio of NCO/OH groups, i.e., an abundance ratio between isocyanate groups (NCO groups) and hydroxy groups (OH groups) in the main agent (A) and the curing agent (B), be 1.0 to 1.5. With an equivalent ratio of NCO/OH groups in the specified range, the adhesiveness of the adhesive and the workability in the adhesion step are improved. Incidentally, the isocyanate groups are mainly derived from the urethane prepolymer (a), and the hydroxy groups are mainly derived from the polyether polyol (b).

### Examples

The object and the advantage of the present disclosure are further described in detail with reference to Examples as follows, though the present disclosure is not limited to Examples.

### <Example 1>

### (Main agent #1)

A kneading vessel having a stirrer, a nitrogen inlet tube, a vacuum pump and a heating/cooling device was charged with 20.9 g of PREMINOL 3012 (polyether polyol manufactured by AGC Chemicals Company, weight average molecular weight (Mw): 12000, tri-functional), 10.5 g of MITSUBISHI CARBON #32 (carbon black manufactured by Mitsubishi Chemical Corporation, average particle size: 28 nm), 10.9 g of ICEBERG (calcined kaolin manufactured by Shiraishi Calcium Kaisha, Ltd.), and 5.2 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 70°C, and 2.1 g of MILLIONATE MT (monomeric MDI (diphenylmethane diisocyanate) manufactured by Tosoh Corporation; "MILLIONATE" is a registered trademark; NCO: 33.6%) and 200 ppm (relative to the weight of urethane prepolymer) of a tin catalyst (NIKKA OCTHIX tin) were added into the vessel. After introduction of nitrogen, the mixture was kept stirred for 1 hour. Finally, the content was cooled to a temperature of 40°C, and 0.4 g of Si-69 (silane coupling agent manufactured by Evonik, sulfide silane) was added into the vessel.

### (Curing agent #1)

A kneading vessel having a stirrer, a nitrogen inlet tube, a vacuum pump and a heating/cooling device was charged with 21.0 g of PREMINOL 7012 (polyether polyol manufactured by AGC Chemicals Company, weight average molecular weight (Mw): 10000, tri-functional), 11.2 g of ASAHI CARBON #70 (carbon black manufactured by Asahi Carbon Co., Ltd., average particle size: 28 nm), 11.4 g of ICEBERG (calcined kaolin manufactured by Shiraishi Calcium Kaisha, Ltd.), and 5.5 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 40°C, and 0.5 g of TEXNOL IBM-12 (1-isobutyl-2-methylimidazole, an amine catalyst manufactured by Nippon Nyukazai Co., Ltd.; "TEXNOL" is a registered trademark) and 0.4 g of KBM-803 (a silane coupling agent manufactured by Shin-Etsu Chemical Co., Ltd., mercaptosilane) were added into the vessel and the mixture was stirred for 10 minutes.

### <Example 2>

### (Main agent #2)

A kneading vessel having a stirrer, a nitrogen inlet tube, a vacuum pump and a heating/cooling device was charged with 30.0 g of PREMINOL 7012 (polyether polyol manufactured by AGC Chemicals Company, weight average molecular weight (Mw): 10000, tri-functional), 6.5 g of MITSUBISHI CARBON #32 (carbon black manufactured by Mitsubishi Chemical Corporation, average particle size: 28 nm), 6.5 g of ICEBERG (calcined kaolin manufactured by Shiraishi Calcium Kaisha, Ltd.) and 3.1 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 70°C, and 3.5 g of MILLIONATE MT (monomeric MDI (diphenylmethane diisocyanate) manufactured by Tosoh Corporation; "MILLIONATE" is a registered trademark; NCO: 33.6%) and 200 ppm (relative to the weight of urethane prepolymer) of a tin catalyst (NIKKA OCTHIX tin) were added into the vessel. After introduction of nitrogen, the mixture was kept stirred for 1 hour. Finally, the content was cooled to a temperature of 40°C, and 0.4 g of KBM-9659 (a silane coupling agent manufactured by Shin-Etsu Chemical Co., Ltd., isocyanurate silane) was added into the vessel.

### (Curing agent #2)

A kneading vessel having a stirrer, a nitrogen inlet tube, a vacuum pump and a heating/cooling device was charged with 21.0 g of PREMINOL 7012 (polyether polyol manufactured by AGC Chemicals Company, weight average molecular weight (Mw): 10000, tri-functional), 11.2 g of ASAHI CARBON #70 (carbon black manufactured by Asahi Carbon Co., Ltd., average particle size: 28 nm), 11.0 g of ICEBERG (calcined kaolin manufactured by Shiraishi Calcium Kaisha, Ltd.) and 5.5 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 40°C, and 0.5 g of TEXNOL IBM-12 (1-isobutyl-2-methylimidazole, an amine catalyst manufactured by Nippon Nyukazai Co., Ltd.; "TEXNOL" is a registered trademark) and 0.8 g of KBM-803 (a silane coupling agent manufactured by Shin-Etsu Chemical Co., Ltd., mercaptosilane) were added into the vessel and the mixture was stirred for 10 minutes.

### <Example 3>

### (Main agent #3)

A kneading vessel having a stirrer, a nitrogen inlet tube, a vacuum pump and a heating/cooling device was charged with 17.0 g of PREMINOL 3012 (polyether polyol manufactured by AGC Chemicals Company, weight average molecular weight (Mw): 12000, tri-functional), 13.2 g of MITSUBISHI CARBON #32 (carbon black manufactured by Mitsubishi Chemical Corporation, average particle size: 28 nm), 7.5 g of ICEBERG (calcined kaolin manufactured by Shiraishi Calcium Kaisha, Ltd.), and 10.6 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 70°C, and 1.5 g of MILLIONATE MT (monomeric MDI (diphenylmethane diisocyanate) manufactured by Tosoh Corporation; "MILLIONATE" is a registered trademark; NCO: 33.6%) and 200 ppm (relative to the weight of urethane prepolymer) of a tin catalyst (NIKKA OCTHIX tin) were added into the vessel. After introduction of nitrogen, the mixture was kept stirred for 1 hour. Finally, the content was cooled to a temperature of 40°C, and 0.2 g of KBM-9659 (a silane coupling agent manufactured by Shin-Etsu Chemical Co., Ltd., isocyanurate silane) was added into the vessel.

### (Curing agent #3)

A kneading vessel having a stirrer, a nitrogen inlet tube, a vacuum pump and a heating/cooling device was charged with 16.0 g of PREMINOL 3012 (polyether polyol manufactured by AGC Chemicals Company, weight average molecular weight (Mw): 12000, tri-functional), 6.0 g of ASAHI CARBON #70 (carbon black manufactured by Asahi Carbon Co., Ltd., average particle size: 28 nm), 17.0 g of ICEBERG (calcined kaolin manufactured by Shiraishi Calcium Kaisha, Ltd.), and 10.4 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 40°C, and 0.5 g of TEXNOL IBM-12 (1-isobutyl-2-methylimidazole, an amine catalyst manufactured by Nippon Nyukazai Co., Ltd.; "TEXNOL" is a registered trademark) and 0.1 g of KBM-573 (a silane coupling agent manufactured by Shin-Etsu Chemical Co., Ltd., aminosilane) were added into the vessel and the mixture was stirred for 10 minutes.

### <Example 4>

### (Main agent #4)

A kneading vessel having a stirrer, a nitrogen inlet tube, a vacuum pump and a heating/cooling device was charged with 20.0 g of PREMINOL 7012 (polyether polyol manufactured by AGC Chemicals Company, weight average molecular weight (Mw): 10000, tri-functional), 7.0 g of MITSUBISHI CARBON #32 (carbon black manufactured by Mitsubishi Chemical Corporation, average particle size: 28 nm), 6.1 g of ICEBERG (calcined kaolin manufactured by Shiraishi Calcium Kaisha, Ltd.), and 14.4 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 70°C, and 2.1 g of MILLIONATE MT (monomeric MDI (diphenylmethane diisocyanate) manufactured by Tosoh Corporation; "MILLIONATE" is a registered trademark; NCO: 33.6%) and 200 ppm (relative to the weight of urethane prepolymer) of a tin catalyst (NIKKA OCTHIX tin) were added into the vessel. After introduction of nitrogen, the mixture was kept stirred for 1 hour. Finally, the content was cooled to a temperature of 40°C, and 0.4 g of Si-69 (silane coupling agent manufactured by Evonik, sulfide silane) was added into the vessel.

### (Curing agent #4)

A kneading vessel having a stirrer, a nitrogen inlet tube, a vacuum pump and a heating/cooling device was charged with 30.0 g of PREMINOL 3012 (polyether polyol manufactured by AGC Chemicals Company, weight average molecular weight (Mw): 12000, tri-functional), 15.0 g of ASAHI CARBON #70 (carbon black manufactured by Asahi Carbon Co., Ltd., average particle size: 28 nm) and 4.0 g of ICEBERG (calcined kaolin manufactured by Shiraishi Calcium Kaisha, Ltd.), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 40°C, and 0.5 g of TEXNOL IBM-12 (1-isobutyl-2-methylimidazole, an amine catalyst manufactured by Nippon Nyukazai Co., Ltd.; "TEXNOL" is a registered trademark), 0.1 g of KBM-573 (a silane coupling agent manufactured by Shin-Etsu Chemical Co., Ltd., aminosilane) and 0.4 g of KBM-803 (a silane coupling agent manufactured by Shin-Etsu Chemical Co., Ltd., mercaptosilane) were added into the vessel and the mixture was stirred for 10 minutes.

### <Example 5>

### (Main agent #5)

A kneading vessel having a stirrer, a nitrogen inlet tube, a vacuum pump and a heating/cooling device was charged with 20.9 g of PREMINOL 3012 (polyether polyol manufactured by AGC Chemicals Company, weight average molecular weight (Mw): 12000, tri-functional), 10.5 g of MITSUBISHI CARBON #32 (carbon black manufactured by Mitsubishi Chemical Corporation, average particle size: 28 nm), 10.9 g of ICEBERG (calcined kaolin manufactured by Shiraishi Calcium Kaisha, Ltd.), and 4.1 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 70°C, and 2.1 g of MILLIONATE MT (monomeric MDI (diphenylmethane diisocyanate) manufactured by Tosoh Corporation; "MILLIONATE" is a registered trademark; NCO: 33.6%) and 200 ppm (relative to the weight of urethane prepolymer) of a tin catalyst (NIKKA OCTHIX tin) were added into the vessel. After introduction of nitrogen, the mixture was kept stirred for 1 hour. Finally, the content was cooled to a temperature of 40°C, and 1.5 g of Si-69 (silane coupling agent manufactured by Evonik, sulfide silane) was added into the vessel.

### (Curing agent #5)

A kneading vessel having a stirrer, a nitrogen inlet tube, a vacuum pump and a heating/cooling device was charged with 18.0 g of PREMINOL 7012 (polyether polyol manufactured by AGC Chemicals Company, weight average molecular weight (Mw): 10000, tri-functional), 11.2 g of ASAHI CARBON #70 (carbon black manufactured by Asahi Carbon Co., Ltd., average particle size: 28 nm), 11.4 g of ICEBERG (calcined kaolin manufactured by Shiraishi Calcium Kaisha, Ltd.), and 7.7 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 40°C, and 0.5 g of TEXNOL IBM-12 (1-isobutyl-2-methylimidazole, an amine catalyst manufactured by Nippon Nyukazai Co., Ltd.; "TEXNOL" is a registered trademark) and 1.2 g of KBM-803 (a silane coupling agent manufactured by Shin-Etsu Chemical Co., Ltd., mercaptosilane) were added into the vessel and the mixture was stirred for 10 minutes.

### <Comparative Example 1>

### (Main agent #6)

A kneading vessel having a stirrer, a nitrogen inlet tube, a vacuum pump and a heating/cooling device was charged with 20.0 g of EXCENOL 837 (a polyether polyol manufactured by AGC Chemicals Company, weight average molecular weight (Mw): 6000, tri-functional), 13.1 g of MITSUBISHI CARBON #32 (carbon black manufactured by Mitsubishi Chemical Corporation, average particle size: 28 nm) and 13.5 g of ICEBERG (calcined kaolin manufactured by Shiraishi Calcium Kaisha, Ltd.), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 70°C, and 3.0 g of MILLIONATE MT (monomeric MDI (diphenylmethane diisocyanate) manufactured by Tosoh Corporation; "MILLIONATE" is a registered trademark; NCO: 33.6%) and 200 ppm (relative to the weight of urethane prepolymer) of a tin catalyst (NIKKA OCTHIX tin) were added into the vessel. After introduction of nitrogen, the mixture was kept stirred for 1 hour. Finally, the content was cooled to a temperature of 40°C, and 0.2 g of Si-69 (silane coupling agent manufactured by Evonik, sulfide silane) and 0.2 g of KBM-9659 (a silane coupling agent manufactured by Shin-Etsu Chemical Co., Ltd., isocyanurate silane) were added into the vessel.

### (Curing agent #6)

A kneading vessel having a stirrer, a nitrogen inlet tube, a vacuum pump and a heating/cooling device was charged with 40.0 g of PREMINOL 3012 (polyether polyol manufactured by AGC Chemicals Company, weight average molecular weight (Mw): 12000, tri-functional) and 9.1 g of ASAHI CARBON #70 (carbon black manufactured by Asahi Carbon Co., Ltd., average particle size: 28 nm), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 40°C, and 0.5 g of TEXNOL IBM-12 (1-isobutyl-2-methylimidazole, an amine catalyst manufactured by Nippon Nyukazai Co., Ltd.; "TEXNOL" is a registered trademark) and 0.4 g of KBM-803 (a silane coupling agent manufactured by Shin-Etsu Chemical Co., Ltd., mercaptosilane) were added into the vessel and the mixture was stirred for 10 minutes.

### <Comparative Example 2>

### (Main agent #7)

A kneading vessel having a stirrer, a nitrogen inlet tube, a vacuum pump and a heating/cooling device was charged with 20.0 g of PREMINOL 3012 (polyether polyol manufactured by AGC Chemicals Company, weight average molecular weight (Mw): 12000, tri-functional), 13.7 g of MITSUBISHI CARBON #32 (carbon black manufactured by Mitsubishi Chemical Corporation, average particle size: 28 nm) and 13.9 g of ICEBERG (calcined kaolin manufactured by Shiraishi Calcium Kaisha, Ltd.), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 70°C, and 2.0 g of MILLIONATE MT (monomeric MDI (diphenylmethane diisocyanate) manufactured by Tosoh Corporation; "MILLIONATE" is a registered trademark; NCO: 33.6%) and 200 ppm (relative to the weight of urethane prepolymer) of a tin catalyst (NIKKA OCTHIX tin) were added into the vessel. After introduction of nitrogen, the mixture was kept stirred for 1 hour. Finally, the content was cooled to a temperature of 40°C, and 0.4 g of KBM-9659 (a silane coupling agent manufactured by Shin-Etsu Chemical Co., Ltd., isocyanurate silane) was added into the vessel.

### (Curing agent #7)

A kneading vessel having a stirrer, a nitrogen inlet tube, a vacuum pump and a heating/cooling device was charged with 20.0 g of EXCENOL 510 (polyether polyol manufactured by AGC Chemicals Company, weight average molecular weight (Mw): 4000, bi-functional), 11.3 g of ASAHI CARBON #70 (carbon black manufactured by Asahi Carbon Co., Ltd., average particle size: 28 nm), 11.4 g of ICEBERG (calcined kaolin manufactured by Shiraishi Calcium Kaisha, Ltd.), and 6.4 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 40°C, and 0.5 g of TEXNOL IBM-12 (1-isobutyl-2-methylimidazole, an amine catalyst manufactured by Nippon Nyukazai Co., Ltd.; "TEXNOL" is a registered trademark) and 0.4 g of KBM-573 (a silane coupling agent manufactured by Shin-Etsu Chemical Co., Ltd., aminosilane) were added into the vessel and the mixture was stirred for 10 minutes.

### <Comparative Example 3>

### (Main agent #8)

A kneading vessel having a stirrer, a nitrogen inlet tube, a vacuum pump and a heating/cooling device was charged with 20.9 g of PREMINOL 3012 (polyether polyol manufactured by AGC Chemicals Company, weight average molecular weight (Mw): 12000, tri-functional), 10.5 g of MITSUBISHI CARBON #32 (carbon black manufactured by Mitsubishi Chemical Corporation, average particle size: 28 nm), 10.9 g of ICEBERG (calcined kaolin manufactured by Shiraishi Calcium Kaisha, Ltd.), and 5.6 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 70°C, and 2.1 g of MILLIONATE MT (monomeric MDI (diphenylmethane diisocyanate) manufactured by Tosoh Corporation; "MILLIONATE" is a registered trademark; NCO: 33.6%) and 200 ppm (relative to the weight of urethane prepolymer) of a tin catalyst (NIKKA OCTHIX tin) were added into the vessel. After introduction of nitrogen, the mixture was kept stirred for 1 hour. Finally, the content was cooled to a temperature of 40°C.

### (Curing agent #8)

A kneading vessel having a stirrer, a nitrogen inlet tube, a vacuum pump and a heating/cooling device was charged with 21.0 g of PREMINOL 7012 (polyether polyol manufactured by AGC Chemicals Company, weight average molecular weight (Mw): 10000, tri-functional), 11.2 g of ASAHI CARBON #70 (carbon black manufactured by Asahi Carbon Co., Ltd., average particle size: 28 nm), 11.4 g of ICEBERG (calcined kaolin manufactured by Shiraishi Calcium Kaisha, Ltd.), and 5.7 g of DINP (diisononyl phthalate), and the mixture was stirred for 30 minutes until disappearance of the lumps of carbon black. Subsequently, the kneading vessel was heated until the content temperature reached 100°C, and after the internal pressure of the kneading vessel was reduced to 20 mmHg with a vacuum pump, the mixture was kept stirred for one hour. Furthermore, the content was cooled to a temperature of 40°C, and 0.5 g of TEXNOL IBM-12 (1-isobutyl-2-methylimidazole, an amine catalyst manufactured by Nippon Nyukazai Co., Ltd.; "TEXNOL" is a registered trademark) and 0.2 g of KBM-573 (a silane coupling agent manufactured by Shin-Etsu Chemical Co., Ltd., aminosilane) were added into the vessel and the mixture was stirred for 10 minutes.

### [Non-primer adhesiveness]

The main agent and the curing agent corresponding to Examples 1 to 5 and Comparative Examples 1 to 3 were mixed with a planetary apparatus to prepare a urethane composition. The urethane composition was directly applied to a polypropylene substrate after flame treatment in a bead form, and a release paper laminated thereon was pressure bonded, such that the adhesive had a thickness of 3 mm. After left standing at 23°C and 50% RH (relative humidity) for 72 hours, a coated sample after curing was obtained. The coated sample after curing was left standing at 85°C and 90% RH (relative humidity) for 240 hours to be subjected to hydrothermal aging, so that a coated sample after hydrothermal aging was obtained. The coated sample after curing and the coated sample after hydrothermal aging were subjected to a peeling test with knife cutting for evaluation on the non-primer adhesiveness.

The adhesiveness of an adhesive was evaluated as "A" when a cohesive failure occurred in the bonded portion, and evaluated as "B" when interfacial failure occurred between the surface of a polypropylene substrate and the adhesive.

### [Test on thermal creep resistance]

The main agent and the curing agent corresponding to Examples 1 to 5 and Comparative Examples 1 to 3 were mixed with a planetary apparatus to prepare a urethane composition. The urethane composition was directly applied to a polypropylene substrate after flame treatment in a bead form, and a polypropylene substrate after flame treatment in the same manner laminated thereon was pressure bonded, such that the adhesive had a thickness of 3 mm. The sample was left standing at 23°C and 50% RH (relative humidity) for 72 hours for curing. After curing, a load of 375.3 N [38.3 kgf] was applied to an adhesion area of 25 mm by 25 mm in a creep test in the 180° shearing direction at 90°C. When no drop occurred in 168 hours, the sample was evaluated as "A", and when drop occurred, the sample was evaluated as "B".

### [Shore A hardness]

The main agent and the curing agent corresponding to Examples 1 to 5 and Comparative Examples 1 to 3 were mixed with a planetary apparatus to prepare a urethane composition. A sample for evaluation was made by applying the urethane composition to a polypropylene substrate so as to have a thickness of 3 mm, and stacking the coated products to a thickness of 12 mm or more. The sample thus made for evaluation was left standing at 23°C and 50% RH (relative humidity) for 72 hours, and the Shore A hardness of the adhesive layer was measured in accordance with JIS K6253, with a Shore A durometer.

Compounding and addition of materials are shown in Table 1, and evaluation results are shown in Table 2.

**[Table 1]**

| Item | | | | Example | | | | | Comparative Example | | |
|---|---|---|---|---|---|---|---|---|---|---|---|
| | | | | 1 | 2 | 3 | 4 | 5 | 1 | 2 | 3 |
| Main agent | Urethane prepolymer | Polyol | PREMINOL 3012 (Mw: 12000, tri-functional) | 20.9 | - | 17.0 | - | 20.9 | - | 20.0 | 20.9 |
| | | | PREMINOL 7012 (Mw: 10000, tri-functional) | - | 30.0 | - | 20.0 | - | - | - | - |
| | | | EXCENOL 837 (Mw: 6000, tri-functional) | - | - | - | - | - | 20.0 | - | - |
| | | Diisocyanate | MILLIONATE MT (NCO: 33.6%) | 2.1 | 3.5 | 1.5 | 2.1 | 2.1 | 3.0 | 2.0 | 2.1 |
| | Carbon black | | MITSUBISHI CARBON #32 (average particle size: 28 nm) | 10.5 | 6.5 | 13.2 | 7.0 | 10.5 | 13.1 | 13.7 | 10.5 |
| | Calcined kaolin | | ICEBERG | 10.9 | 6.5 | 7.5 | 6.1 | 10.9 | 13.5 | 13.9 | 10.9 |
| | Plasticizer | | Diisononyl phthalate (DINP) | 5.2 | 3.1 | 10.6 | 14.4 | 4.1 | - | - | 5.6 |
| | Sulfide silane | | Si-69 | 0.4 | - | - | 0.4 | 1.5 | 0.2 | - | - |
| | Isocyanurate silane | | KBM-9659 | - | 0.4 | 0.2 | - | - | 0.2 | 0.4 | - |
| Curing agent | Polyol | | PREMINOL 3012 (Mw: 12000, tri-functional) | - | - | 16.0 | 30.0 | - | 40.0 | - | - |
| | | | PREMINOL 7012 (Mw: 10000, tri-functional) | 21.0 | 21.0 | - | - | 18.0 | - | - | 21.0 |
| | | | EXCENOL 510 (Mw: 4000, bi-functional) | - | - | - | - | - | - | 20.0 | - |
| | Carbon black | | ASAHI CARBON #70 (average particle size: 28 nm) | 11.2 | 11.2 | 6.0 | 15.0 | 11.2 | 9.1 | 11.3 | 11.2 |
| | Calcined kaolin | | ICEBERG | 11.4 | 11.0 | 17.0 | 4.0 | 11.4 | - | 11.4 | 11.4 |
| | Plasticizer | | Diisononyl phthalate (DINP) | 5.5 | 5.5 | 10.4 | - | 7.7 | - | 6.4 | 5.7 |
| | Aminosilane | | KBM-573 | - | - | 0.1 | 0.1 | - | - | 0.4 | 0.2 |
| | Mercaptosilane | | KBM-803 | 0.4 | 0.8 | - | 0.4 | 1.2 | 0.4 | - | - |
| | Amine catalyst | | TEXNOL IBM-12 | 0.5 | 0.5 | 0.5 | 0.5 | 0.5 | 0.5 | 0.5 | 0.5 |

**[Table 2]**

| | | Example | | | | | Comparative Example | | |
|---|---|---|---|---|---|---|---|---|---|
| | | 1 | 2 | 3 | 4 | 5 | 1 | 2 | 3 |
| Non-primer adhesiveness | After curing (23°C, 50% RH, 72 hours) | A | A | A | A | A | A | A | A |
| | After hydrothermal aging (after curing, 85°C, 90% RH, 240 hours) | A | A | A | A | A | A | A | B |
| Thermal creep resistance | 90°C, 5 MPa | A | A | A | A | A | B | B | A |
| Hardness | Shore A hardness | 35 | 31 | 35 | 37 | 34 | 39 | 40 | 41 |

Although the sample prepared by using the urethane composition of Comparative Example 1 made from a polyether polyol in the main agent (A) having a weight average molecular weight (Mw) of 6000 had an excellent bonding state in the non-primer adhesiveness, with a fracture mode of cohesion failure and a high Shore A hardness of 39, drop occurred in the evaluation on the thermal creep resistance.

Further, although the sample prepared by using the urethane composition of Comparative Example 2 made from a polyether polyol in the curing agent (B) having a weight average molecular weight (Mw) of 4000 was excellent in the non-primer adhesiveness and the Shore A hardness in the same manner as in Comparative Example 1, drop occurred in the evaluation on the thermal creep resistance.

Meanwhile, the sample prepared by using the urethane composition of Comparative Example 3 with a content of the silane coupling agent of 0.2 mass% caused interfacial failure (interfacial peeling) in the evaluation on the non-primer adhesiveness after hydrothermal aging (fracture mode in the bonding portion), incapable of saying that the bonding state was in good state.

In contrast, the sample prepared by using any of the urethane compositions of Examples 1 to 5 in the scope of the present invention had excellent evaluation results in any of the non-primer adhesiveness, the thermal creep resistance and the Shore A hardness.

## Claims

1. A two-part curable urethane composition comprising a main agent (A) containing a urethane prepolymer (a), and a curing agent (B) containing a polyether polyol (b) having a weight average molecular weight of 8000 or more and an amine catalyst (c), wherein
the urethane prepolymer (a) is a reaction product of a polyether polyol (a-1) having a weight average molecular weight of 8000 or more and a diisocyanate (a-2),
at least one of the main agent (A) and the curing agent (B) contains a carbon black (d), and a total content of the carbon black (d) is 10 to 40 mass% relative to the total amount of the main agent (A) and the curing agent (B), and
at least one of the main agent (A) and the curing agent (B) contains a silane coupling agent (e), and a total content of the silane coupling agent (e) is 0.3 to 5.0 mass% relative to the total amount of the main agent (A) and the curing agent (B).

2. The two-part curable urethane composition according to claim 1, wherein the carbon black (d) has an average particle size of 20 to 40 nm.

3. The two-part curable urethane composition according to claim 1 or 2, having an equivalent ratio of NCO/OH groups of 1.0 to 1.5 in the main agent (A) and the curing agent (B).
